# FASCICULE DE BREVET EUROPEEN

(11) **EP 2 861 865 B1**
(45) Date de publication et mention de la délivrance du brevet: **02.12.2015**
(21) Numéro de dépôt: 14708901.5
(22) Date de dépôt: 11.03.2014
(51) Int. Cl.: F03D 3/02, F03D 3/06, F03B 3/12

(54) **DISPOSITIF DE TRANSFORMATION DE L'ÉNERGIE CINÉTIQUE D'UN FLUIDE EN ÉNERGIE MÉCANIQUE**
VERFAHREN ZUR UMWANDLUNG DER KINETISCHEN ENERGIE EINES FLUIDS IN MECHANISCHE ENERGIE
METHOD FOR CONVERTING THE KINETIC ENERGY OF A FLUID INTO MECHANICAL ENERGY

(30) Priorité: 13.03.2013 FR 1352225
(43) Date de publication de la demande: 22.04.2015
(73) Titulaire: Pasblancq, Maurice, 97490 Ste Clotilde - La Reunion (FR)
(72) Inventeur: Pasblancq, Maurice, 97490 Ste Clotilde - La Reunion (FR)
(74) Mandataire: Ipside
(86) Numéro de dépôt international: PCT/EP2014/054664
(87) Numéro de publication internationale: WO 2014/139991

(56) Documents cités:
- US-A1- 2012 267 895

## Description

### DOMAINE TECHNIQUE

La présente invention appartient au domaine des dispositifs de transformation de l'énergie cinétique de fluides en énergie mécanique, et concerne plus particulièrement des dispositifs du type comportant un rotor, entraîné en rotation par l'écoulement d'un fluide gazeux ou liquide.

### ÉTAT DE LA TECHNIQUE

Notamment, les éoliennes permettent de transformer l'énergie cinétique du vent en énergie mécanique. De manière conventionnelle, une éolienne comporte un rotor, comportant plusieurs pales, couplé mécaniquement à un moyen de transmission d'énergie mécanique (arbre, moyeu, engrenages, etc.). En fonctionnement, le rotor est entraîné en rotation par l'énergie cinétique du vent, et l'énergie mécanique ainsi créée est transmise par le moyen de transmission à un système de traitement de l'énergie mécanique, tel qu'une pompe, un générateur électrique, etc.

Les différents types d'éoliennes connus diffèrent notamment par la forme de leurs pales, qui dépend notamment de l'orientation prévue de l'axe de rotation du rotor par rapport à la direction principale du vent.

Les éoliennes connues sont généralement configurées de sorte que l'axe de rotation du rotor est horizontal, c'est-à-dire sensiblement parallèle à la direction principale du vent. On connaît également des éoliennes dont l'axe de rotation du rotor est vertical, c'est-à-dire sensiblement orthogonal à la direction principale du vent. Par exemple les éoliennes de type Darrieus et Savonnius sont des éoliennes dont l'axe de rotation du rotor est vertical. Une éolienne représentant l'art antérieur est décrite dans le document US 2012/0267895 A1.

### EXPOSÉ DE L'INVENTION

La présente invention a pour objectif de remédier à tout ou partie des limitations des solutions de l'art antérieur, notamment celles exposées ci-avant, en proposant un dispositif de transformation de l'énergie cinétique de fluides en énergie mécanique qui soient simples et peu coûteux à fabriquer.

En outre, la présente invention a également pour objectif de proposer une solution qui permette, dans des modes particuliers de réalisation, de transformer l'énergie cinétique en énergie mécanique y compris lorsque la direction d'écoulement du fluide est sensiblement rasante sur des pales d'un rotor du dispositif de transformation.

A cet effet, l'invention concerne un dispositif de transformation de l'énergie cinétique d'un fluide en énergie mécanique, ledit dispositif comportant un rotor mobile en rotation autour d'un axe de rotation, suivant au moins un sens principal de rotation dudit rotor, et comportant au moins deux pales s'étendant transversalement par rapport à l'axe de rotation dudit rotor, le sens principal de rotation du rotor définissant, pour chaque pale, un côté avant vers lequel chaque pale se déplace lorsque le rotor tourne dans ledit sens principal de rotation, et un côté arrière opposé audit côté avant. En outre, chaque pale comporte deux ailes délimitant un canal s'étendant transversalement par rapport à l'axe de rotation entre une extrémité centrale de ladite pale, du côté de l'axe de rotation, et une extrémité extérieure de ladite pale, du côté opposé à ladite extrémité centrale, ledit canal étant ouvert vers l'arrière de ladite pale et lesdites ailes se rapprochant l'une de l'autre en direction de l'extrémité extérieure de ladite pale.

Du fait que chaque pale du rotor se présente sous la forme d'un canal s'étendant transversalement et ouvert vers l'arrière, un fluide provenant de l'arrière d'une pale, et qui s'écoule vers l'avant de cette pale, pénètre dans le canal par l'ouverture prévue à cet effet. Ensuite, le fluide applique une force sur le fond du canal et s'écoule en direction de l'extrémité extérieure de cette pale en entraînant ladite pale en rotation suivant le sens principal de rotation.

En outre, de telles pales permettent de transformer l'énergie cinétique en énergie mécanique y compris lorsque la direction d'écoulement du fluide est sensiblement rasante sur une pale du rotor. En effet, le fluide entre alors dans le canal au niveau de l'extrémité centrale de la pale et s'écoule en direction de l'extrémité extérieure. Du fait que les ailes se rapprochent l'une de l'autre en direction de l'extrémité extérieure de chaque aile, le fluide s'écoule dans un canal dont le fond est de plus en plus étroit. Malgré la direction d'écoulement sensiblement rasante, le fluide en s'écoulant applique une force sur lesdites ailes qui entraîne la pale en rotation suivant le sens principal de rotation.

Les ailes de chaque pale sont solidaires au niveau d'une ligne de jonction et s'étendent, à partir de ladite ligne de jonction, vers l'arrière de ladite pale en formant un profil en V dans un plan orthogonal à ladite ligne de jonction, dit « plan de mesure ».

Les ailes de chaque pale sont agencées de sorte que l'angle formé par lesdites ailes, dans un plan de mesure et à l'arrière de ladite pale, varie avec la position du point d'intersection dudit plan de mesure avec la ligne de jonction en diminuant en direction de l'extrémité extérieure de ladite pale.

Les ailes de chaque pale sont configurées de sorte que la longueur desdites ailes, mesurée dans un plan de mesure, varie avec la position du point d'intersection sur la ligne de jonction en augmentant en direction de l'extrémité extérieure de ladite pale.

Dans des modes particuliers de réalisation, le dispositif de transformation peut comporter en outre l'une ou plusieurs des caractéristiques suivantes, prises isolément ou selon toutes les combinaisons possibles.

De telles dispositions d'augmenter le débit d'air intercepté au niveau au niveau de l'extrémité extérieure d'une pale, et donc d'augmenter le moment de la force appliquée par l'écoulement du fluide sur ladite pale.

Dans un mode particulier de réalisation, les ailes de chaque pale comportant chacune un bord opposé à la ligne de jonction, lesdites ailes sont agencées de sorte que la distance entre les bords desdites ailes, mesurée dans un plan de mesure, est la même en tout point de la ligne de jonction.

Dans un mode particulier de réalisation, l'angle formé par les ailes de chaque pale est, du côté de l'extrémité centrale de ladite pale, de valeur comprise entre 70° et 100° et, du côté de l'extrémité extérieure de ladite pale, de valeur comprise entre 30° et 60°.

Dans un mode particulier de réalisation, chaque pale comporte au moins une paroi, dite « raidisseur », agencée entre les ailes dans le canal.

Dans un mode particulier de réalisation, chaque pale comporte un raidisseur qui s'étend obliquement dans le canal, en direction de l'extrémité extérieure de ladite pale.

Dans un mode particulier de réalisation, le dispositif de transformation d'énergie cinétique de fluides en énergie mécanique comporte plusieurs rotors mobiles en rotation autour du même axe de rotation, chaque rotor comportant au moins deux pales.

Dans un mode particulier de réalisation, le dispositif de transformation d'énergie cinétique de fluides en énergie mécanique comporte deux rotors couplés en rotation comportant chacun exactement deux pales alignées l'une avec l'autre de part et d'autre de l'axe de rotation, les pales de l'un desdits rotors étant agencées orthogonalement aux pales de l'autre desdits rotors.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un mode particulier de réalisation de pales d'un rotor d'un dispositif de transformation,
- Figures 2a et 2b : des représentations schématiques de coupes des pales du rotor du dispositif de transformation de la figure 1,
- Figure 3 : une représentation schématique d'un mode préféré de réalisation de pales d'un rotor d'un dispositif de transformation,
- Figures 4a à 4d : des représentations schématiques de coupes des pales du rotor du dispositif de transformation de la figure 3,
- Figures 5a et 5b : des représentations schématiques de vues en perspective d'exemples de réalisation de raidisseurs d'une pale d'un rotor d'un dispositif de transformation,
- Figure 6 : une représentation schématique d'une variante de réalisation de raidisseurs d'une pale d'un rotor d'un dispositif de transformation,
- Figure 7 : une représentation schématique d'un mode préféré de réalisation d'un dispositif de transformation comportant deux rotors,
- Figure 8 : une représentation schématique d'un mode particulier de réalisation d'un dispositif de transformation comportant quatre rotors,
- Figure 9 : une vue de dessus du dispositif de transformation à quatre rotors de la figure 8,
- Figure 10 : une vue en perspective du dispositif de transformation à quatre rotors de la figure 8.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

La présente invention concerne un dispositif 10 de transformation de l'énergie cinétique d'un fluide en énergie mécanique.

Dans la suite de la description, on se place de manière non limitative dans le cas où le fluide considéré est un gaz, en l'occurrence l'air ambiant. Le dispositif 10 de transformation est donc une éolienne adaptée à transformer l'énergie cinétique du vent en énergie mécanique. Il est à noter cependant que l'invention est de manière générale applicable à tout type de fluide gazeux (air, vapeur, etc.) ou liquide (eau douce ou de mer, etc.).

Le dispositif 10 de transformation comporte un rotor 20 mobile en rotation autour d'un axe 21 de rotation. Le rotor 20 est mobile suivant au moins un sens de rotation, dit « sens 22 principal de rotation », correspondant au sens suivant lequel ledit rotor est entrainé en rotation sous l'effet du vent.

Le dispositif 10 de transformation peut comporter également d'autres éléments qui sortent du cadre de l'invention et ne sont pas détaillés ci-après. Notamment, le dispositif 10 de transformation peut comporter un moyen de transmission de l'énergie mécanique du rotor 20 à un système de traitement de l'énergie mécanique (pompe, générateur électrique, etc.).

Le rotor 20 comporte au moins deux pales 30, 31 s'étendant transversalement par rapport à l'axe 21 de rotation dudit rotor 20, entre une extrémité centrale 32 de chaque pale, du côté de l'axe 21 de rotation, et une extrémité extérieure 33 de chaque pale opposée à l'extrémité centrale 32.

Par « transversalement », on entend de manière générale que lesdites pales s'étendent sensiblement dans un plan orthogonal ou oblique par rapport audit axe 21 de rotation. Dans la suite de la description, on se place de manière non limitative dans le cas où lesdites pales 30, 31 s'étendent sensiblement dans un plan orthogonal à l'axe 21 de rotation, et ce de manière sensiblement radiale par rapport au point d'intersection entre ledit plan et l'axe 21 de rotation.

Le sens 22 principal de rotation du rotor 20 détermine, pour chaque pale 30, 31 dudit rotor 20, un côté avant vers lequel ladite pale 30, 31 se déplace lorsque le rotor tourne dans ledit sens 22 principal de rotation, et un côté arrière de ladite pale 30, 31 opposé audit côté avant.

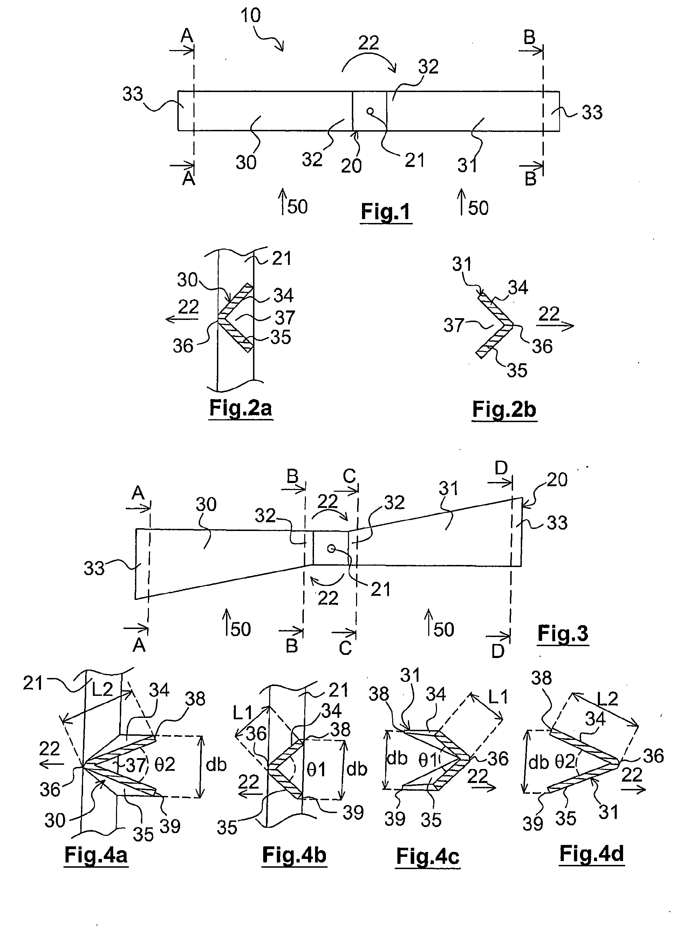

La figure 1 représente schématiquement une vue de dessus d'un mode particulier de réalisation d'un rotor 20 d'un dispositif 10 de transformation comportant exactement deux pales 30, 31. Dans l'exemple non limitatif illustré par la figure 1, lesdites deux pales 30, 31 sont en outre sensiblement alignées l'une avec l'autre, de part et d'autre dudit axe 21 de rotation du rotor 20.

Les figures 2a et 2b représentent schématiquement des coupes des pales 30, 31 du rotor 20, dans des plans de coupe respectivement AA et BB représentés sur la figure 1.

Tel qu'illustré par les figures 2a et 2b, chaque pale 30, 31 comporte deux ailes 34, 35 s'étendant radialement par rapport à l'axe 21 de rotation, et solidaires entre elles au niveau d'une ligne de jonction 36. Dans l'exemple non limitatif illustré par les figures 1, 2a et 2b, la ligne de jonction 36 est sensiblement droite et s'étend radialement par rapport à l'axe 21 de rotation.

Dans toute la présente demande, on entend par « plan de mesure » un plan orthogonal à la ligne de jonction en un point d'intersection. Il existe donc de nombreux plans de mesure différents, correspondant respectivement à des positions différentes du point d'intersection sur la ligne de jonction 36. Notamment, les plans de coupe AA et BB représentés sur la figure 1 sont orthogonaux à la ligne de jonction 36 et sont donc des plans de mesure.

Les ailes 34, 35 de chaque pale 30, 31 s'étendent à partir de la ligne de jonction 36 vers l'arrière de chaque pale 30, 31 en formant un profil en V dans un plan de mesure. Chaque pale 30, 31 est par exemple fabriquée au moyen d'une tôle métallique, pliée de sorte à obtenir le profil en V souhaité.

Lesdites ailes 34, 35 de chaque pale 30, 31 délimitent ainsi un canal 37 s'étendant radialement par rapport à l'axe 21 de rotation du rotor, ledit canal 37 étant ouvert vers l'arrière de chaque pale 30, 31.

Dans la suite de la description, on désigne par « pale active » une pale 30, 31 qui est orientée par rapport au vent, à un instant donné, de sorte que l'air s'écoule depuis l'arrière vers l'avant de ladite pale 30, 31. A contrario, on désigne par « pale passive » une pale 30, 31 qui est orientée de sorte que l'air s'écoule depuis l'avant vers l'arrière de ladite pale 30, 31.

Du fait de la configuration particulière des pales 30, 31 du rotor 20 de la figure 1, lorsqu'une des deux pales 30, 31 est une pale active, l'autre desdites deux pales 30, 31 est nécessairement une pale passive.

La figure 1 représente, sous la référence 50, un exemple de direction d'écoulement de l'air. Pour la direction d'écoulement 50 illustrée sur la figure 1, la pale 30 du rotor 20 est active. L'air pénètre dans le canal 37 formé par les ailes de ladite pale 30 active et est guidé par lesdites ailes 34, 35 vers le fond dudit canal 37, c'est-à-dire vers la ligne de jonction 36. Le vent applique ainsi une force sur le fond dudit canal 37, de sorte ladite pale 30 active est entrainée en rotation suivant le sens 22 principal de rotation tandis que l'air s'écoule en direction de l'extrémité extérieure 33 de ladite pale 30 active.

Pour la direction d'écoulement 50 illustrée sur la figure 1, la pale 31 du rotor 20 est passive. Dans ce cas, les deux ailes 34, 35 présentent une forme aérodynamique qui perturbe peu l'écoulement de l'air, de sorte que le moment de la force appliquée par le vent sur ladite pale 31 passive est négligeable par rapport au moment de la force appliquée par le vent sur la pale 30 active. Grâce à cette forme aérodynamique, la rotation induite par l'effet du vent sur la pale 30 active est donc peu perturbée par l'effet du vent sur la pale 31 passive.

Dans l'exemple de réalisation illustré par les figures 1, 2a et 2b, les deux ailes 34, 35 de chaque pale 30, 31 sont agencées de sorte que l'angle formé par lesdites deux ailes, à l'arrière de chaque pale dans un plan de mesure, est le même quelle que soit la position du point d'intersection dudit plan de mesure avec la ligne de jonction 36.

Les figures 3, 4a à 4d représentent une variante préférée de réalisation des pales 30, 31 du rotor 20, dans lequel les ailes 34, 35 de chaque pale 30, 31 sont agencées de sorte à se rapprocher progressivement l'une de l'autre en direction de l'extrémité extérieure 33 de chaque pale. Dans l'exemple illustré par les figures 3, 4a à 4d, les ailes 34, 35 de chaque pale 30, 31 sont à cet effet agencées de sorte que l'angle formé par les ailes 34, 35 de chaque pale 30, 31, dans un plan de mesure, varie avec la position du point d'intersection sur la ligne de jonction 36 en diminuant progressivement en direction de l'extrémité extérieure de chaque pale 30, 31.

Les figures 4a, 4b 4c et 4db représentent schématiquement des coupes des pales 30, 31 du rotor 20, dans des plans de coupe respectivement AA, BB, CC et DD représentés sur la figure 3. Les plans de coupe AA, BB, CC et DD représentés sur la figure 3 sont orthogonaux à la ligne de jonction 36 et sont donc des plans de mesure.

Plus particulièrement, les figures 4b (plan de coupe BB) et 4c (plan de coupe CC) représentent des coupes des pales respectivement 30 et 31 du rotor 20 au niveau de leurs extrémités centrales 32 respectives. Les figures 4a (plan de coupe AA) et 4d (plan de coupe DD) représentent des coupes des pales respectivement 30 et 31 du rotor 20 au niveau de leurs extrémités extérieures 33 respectives. Au niveau des extrémités centrales 32, l'angle formé par les ailes 34, 35 de chaque pale 30, 31 prend la valeur θ1, tandis qu'au niveau des extrémités extérieures 33, l'angle formé par lesdites ailes 34, 35 prend la valeur θ2 inférieure à 61. Par exemple, la valeur θ1, du côté des extrémités centrales 32, est comprise entre 70° et 100° et la valeur θ2, du côté des extrémités extérieures 33, est de valeur comprise entre 30° et 60°.

Du fait que l'angle formé par les ailes 34, 35 diminue en direction des extrémités extérieures 33, il est possible de transformer l'énergie cinétique en énergie mécanique y compris lorsque la direction d'écoulement de l'air est, à un instant donné, sensiblement rasante sur la pale 30 active du rotor 20. Dans ce cas, l'air entre dans la pale 30 active sensiblement au niveau de l'extrémité centrale 32 et s'écoule progressivement en direction de l'extrémité extérieure 33. Le canal 37 dans lequel s'écoule l'air à partir de l'extrémité centrale 32 de la pale active est représenté sur la figure 4c. Tel qu'illustré par la figure 4c, ledit canal se rétrécit en direction de l'extrémité extérieure 33. L'air en s'écoulant avec une direction d'écoulement sensiblement rasante sur la pale 30 active du rotor dans le canal applique une force sur les ailes 34, 35 à mesure que lesdites ailes 34, 35 se rapprochent l'une de l'autre de sorte que. Ainsi, malgré l'incidence sensiblement rasante de la direction d'écoulement de l'air sur la pale 30 active, le moment de la force appliquée sur les ailes 34, 35 est non négligeable et contribue à entraîner le rotor 20 en rotation suivant le sens 22 principal de rotation.

En outre, la diminution de l'angle formé par les ailes 34, 35 en direction de l'extrémité extérieure 33 confère à la pale 31 passive du rotor 20 une forme qui est de plus en plus aérodynamique en direction de l'extrémité extérieure 33 de ladite pale passive 31. Grace à cette forme aérodynamique optimisée au niveau de l'extrémité extérieure 33, la force appliquée par le vent sur la pale 31 passive est négligeable au niveau de ladite extrémité extérieure, là où le bras de levier est le plus fort. Ainsi, la rotation induite par l'effet du vent sur la pale 30 active est peu perturbée par l'effet du vent sur la pale 31 passive.

Dans un mode préféré de réalisation, également illustré par les figures 3, 4a à 4d, les deux ailes 34, 35 de chaque pale 30, 31 sont en outre configurées de sorte que la longueur desdites deux ailes, mesurée dans un plan de mesure, varie avec la position du point d'intersection sur la ligne de jonction 36 en augmentant progressivement en direction de l'extrémité extérieure 33 de chaque pale 30, 31.

Dans l'exemple illustré par les figures 3, 4a à 4d, on se place de manière non limitative dans le cas où les ailes 34, 35 de chaque pale 30, 31 sont symétriques, c'est-à-dire qu'elles ont la même longueur dans un plan de mesure quelle que soit la position du point d'intersection dudit plan de mesure avec la ligne de jonction 36.

Au niveau des extrémités centrales 32, la longueur des ailes 34, 35 de chaque pale 30, 31 prend la valeur L1, tandis qu'au niveau des extrémités extérieures 33, la longueur des ailes 34, 35 prend la valeur L2 supérieure à L1.

De telles dispositions permettent d'améliorer le moment de la force appliquée, en augmentant le débit d'air intercepté par les pales 30, 31 au niveau des extrémités extérieures 33, là où le bras de levier est le plus important. Plus particulièrement, dans le cas illustré par les figures 3, 4a à 4d, l'augmentation de la longueur des ailes 34, 35 en direction des extrémités extérieures 33 permet de conserver un débit d'air important intercepté par les pales 30, 31 au niveau desdites extrémités extérieures 33, malgré la diminution de l'angle formé par lesdites ailes 34, 35.

Dans l'exemple non limitatif illustré par les figures 3, 4a à 4d, l'augmentation de la longueur des ailes 34, 35 de chaque pale 30, 31 est en outre telle que la distance entre des bords 38, 39 des ailes 34, 35, mesurée dans un plan de mesure, prend la même valeur db quelle que soit la position du point d'intersection dudit plan de mesure avec la ligne de jonction 36.

Dans des modes particuliers de réalisation, chaque pale 30, 31 comporte au moins un raidisseur 40 agencé entre les ailes 34, 35 à l'intérieur du canal formé par lesdites ailes 34, 35.

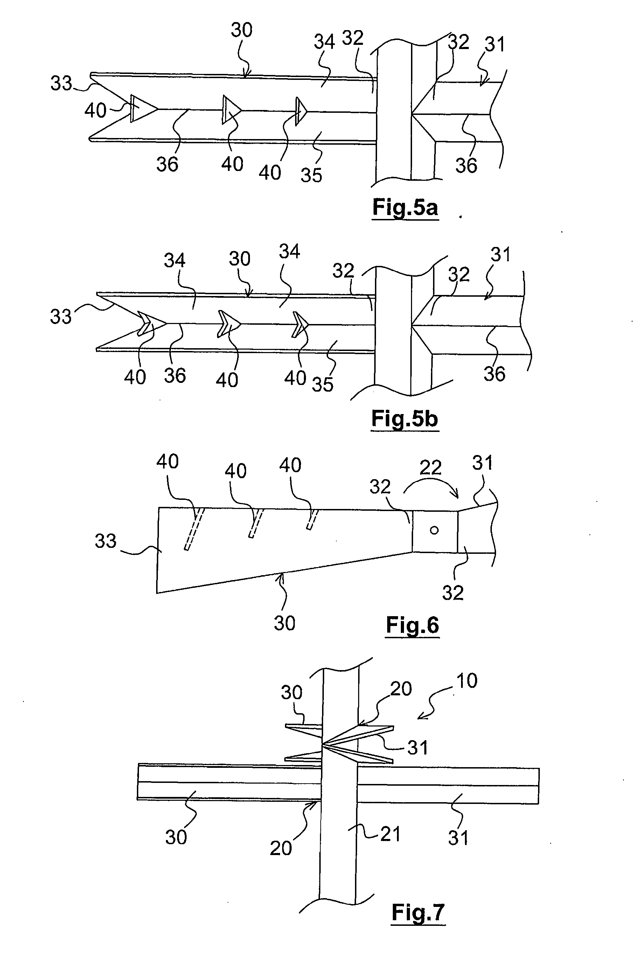

Les figures 5a et 5b représentent des exemples de réalisation de tels raidisseurs 40. Lesdites figures 5a et 5b représentent plus particulièrement des vues en perspective d'une pale 30 comportant trois raidisseurs 40.

Lesdits raidisseurs 40 se présentent sous la forme de parois qui s'étendent, à l'intérieur du canal 37 formé par les ailes 34, 35, transversalement par rapport à la ligne de jonction 36. Lesdits raidisseurs permettent de maintenir lesdites ailes 34, 35 entre elles. En outre, lesdits raidisseurs s'opposent au moins partiellement à l'écoulement de l'air à l'intérieur du canal 37. Ainsi, lorsque la direction d'écoulement de l'air est sensiblement rasante sur une pale 30, 31 active, lesdits raidisseurs permettent d'augmenter le débit d'air intercepté par ladite pale active, et donc d'augmenter le moment de la force appliquée par le vent sur ladite pale.

Les raidisseurs 40 peuvent prendre toute forme adaptée à augmenter le débit d'air intercepté lorsque la direction d'écoulement de l'air est sensiblement rasante sur une pale 30, 31 active. A titre d'exemples non limitatifs, lesdits raidisseurs 40 sont triangulaires et orthogonaux à la ligne de jonction 36 sur la figure 5a, tandis qu'ils sont profilés en V sur la figure 5b.

La figure 6 représente une vue de dessus d'une pale 30, illustrant un mode préféré de réalisation des raidisseurs 40 (représentés en transparence en traits discontinus). Plus particulièrement, chaque raidisseur 40 s'étend, à partir de la ligne de jonction 36, obliquement par rapport à ladite ligne de jonction 36, en direction de l'extrémité extérieure de ladite pale 30. De telles dispositions permettent d'augmenter le moment de la force appliquée sur ladite pale 30 lorsque la direction d'écoulement de l'air est sensiblement rasante.

La figure 7 représente schématiquement un mode préféré de réalisation, dans lequel le dispositif 10 de transformation comporte deux rotors 20 mobiles de rotation au tour du même axe 21 de rotation suivant le même sens 22 principal de rotation. Lesdits deux rotors 20 sont en outre préférentiellement couplés en rotation, c'est-à-dire que la rotation de l'un entraîne la rotation de l'autre.

Chaque rotor 20 du dispositif 10 de transformation de la figure 7 comporte exactement deux pales 30, 31 s'étendant sensiblement radialement par rapport à l'axe 21 de rotation. Les pales 30, 31 de chaque rotor 20 sont alignées l'une avec l'autre de part et d'autre de l'axe 21 de rotation. En outre, les rotors 20 sont agencés de sorte les pales de l'un desdits rotors 20 sont agencées orthogonalement aux pales de l'autre desdits rotors 20. De la sorte, la direction d'écoulement de l'air n'est jamais rasante simultanément sur les pales 30, 31 des deux rotors 20.

De manière plus générale, il est à noter que les modes de réalisation considérés ci-dessus ont été décrits à titre d'exemples non limitatifs, et que d'autres variantes sont par conséquent envisageables.

Notamment, l'invention a été décrite en considérant que le ou chaque rotor 20 du dispositif 10 de transformation comporte exactement deux pales 30, 31. Rien n'exclut, suivant d'autres exemples, d'avoir un ou plusieurs rotors 20 comportant un nombre de pales égal ou supérieur à trois. Le cas échéant, lesdites pales peuvent par exemple être régulièrement réparties autour de l'axe 21 de rotation du rotor 20.

En outre, le dispositif 10 de transformation peut comporter un nombre quelconque de rotors, y compris un nombre de rotors égal ou supérieur à trois.

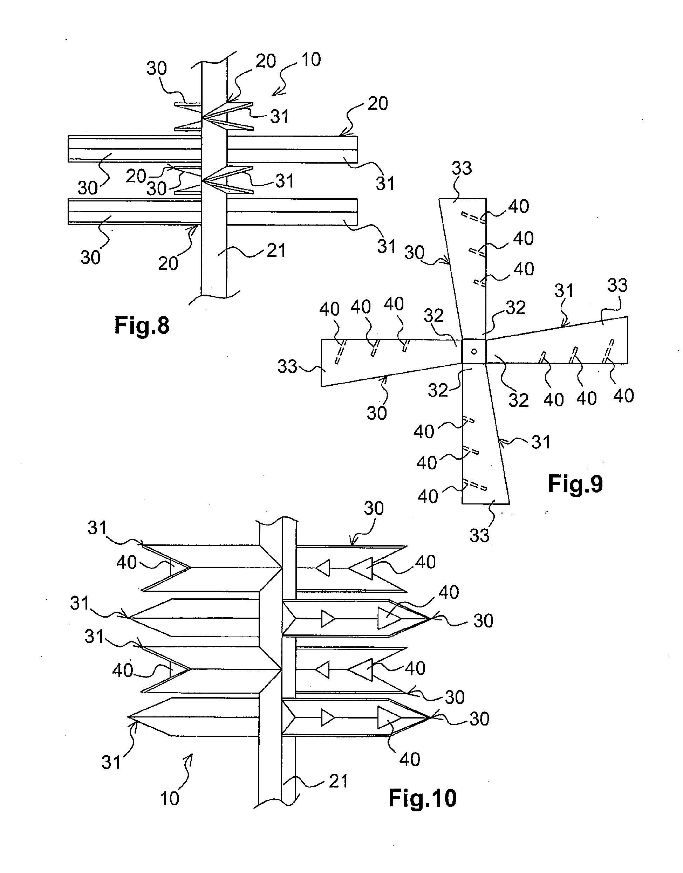

Les figures 8, 9 et 10 représentent différentes vues, respectivement de côté, de dessus et en perspective, d'un exemple non limitatif de réalisation d'un dispositif 10 de transformation comportant quatre rotors. Chaque rotor 20 comporte dans cet exemple deux pales 30, 31 avantageusement équipées de raidisseurs 40 (non représentés sur la figure 8).

En outre, l'invention a été décrite en considérant que les ailes 34, 35 forment un profil en V dans un plan de mesure. Rien n'exclut, suivant d'autres exemples de réalisation, d'avoir d'autres formes de profils, adaptés à former un canal ouvert à l'arrière de chaque pale 30, 31 et s'étendant transversalement par rapport à l'axe 21 de rotation du rotor 20. Suivant un autre exemple non limitatif, les ailes forment un profil en demi-cercle dans un plan de mesure.

Dans le cas d'ailes formant un profil en V, un mode préféré de réalisation de l'invention a été décrit dans lequel l'angle formé par lesdites ailes, mesuré dans un plan de mesure, diminue en direction de l'extrémité extérieure de chaque pale. De manière plus générale, lorsque le profil formé par les ailes 34, 35 en vis-à-vis n'est pas en V, lesdites ailes 34, 35 de chaque pale 30, 31 sont de préférence agencées de sorte à se rapprocher progressivement l'une de l'autre en direction de l'extrémité extérieure de chaque pale de sorte que l'air applique une force sur les ailes d'une pale active y compris lorsqu'il s'écoule avec une incidence rasante par rapport à ladite pale active. Par exemple, des ailes en vis-à-vis d'une pale peuvent former un profil en demi-cercle dont le diamètre diminue en direction de l'extrémité extérieure de ladite pale.

En outre, la partie avant d'une pale 30, 31 peut être constituée par un carénage spécifique de forme aérodynamique optimisée pour diminuer les perturbations sur l'écoulement de l'air lorsque ladite pale est passive.

## Revendications

1. Dispositif (10) de transformation de l'énergie cinétique d'un fluide en énergie mécanique, ledit dispositif comportant un rotor (20) mobile en rotation autour d'un axe (21) de rotation, suivant au moins un sens (22) principal de rotation dudit rotor, et comportant au moins deux pales (30, 31) s'étendant transversalement par rapport à l'axe (21) de rotation dudit rotor, le sens (22) principal de rotation du rotor définissant, pour chaque pale (30, 31), un côté avant vers lequel ladite pale se déplace lorsque le rotor tourne dans ledit sens principal de rotation, et un côté arrière opposé audit côté avant, chaque pale (30, 31) comportant deux ailes (34, 35) délimitant un canal (37) ouvert vers l'arrière de ladite pale et s'étendant transversalement par rapport à l'axe (21) de rotation entre une extrémité centrale (32) de ladite pale, du côté de l'axe (21) de rotation, et une extrémité extérieure (33) de ladite pale, du côté opposé à ladite extrémité centrale, les ailes (34, 35) étant solidaires au niveau d'une ligne de jonction (36) et s'étendant, à partir de ladite ligne de jonction, vers l'arrière de ladite pale en formant un profil en V dans un plan orthogonal à ladite ligne de jonction, dit « plan de mesure », **caractérisé en ce que** les ailes (34, 35) de chaque pale (30, 31) sont :
- agencées de sorte que l'angle formé par lesdites ailes, dans un plan de mesure et à l'arrière de ladite pale, varie avec la position du point d'intersection dudit plan de mesure avec la ligne de jonction (36) en diminuant en direction de l'extrémité extérieure (33) de ladite pale, de sorte que lesdites ailes se rapprochent l'une de l'autre en direction de l'extrémité extérieure (33) de ladite pale,
- configurées de sorte que la longueur desdites ailes, mesurée dans un plan de mesure, varie avec la position du point d'intersection sur la ligne de jonction en augmentant en direction de l'extrémité extérieure (33) de ladite pale.

2. Dispositif (10) selon la revendication 1, **caractérisé en ce que**, les ailes (34, 35) de chaque pale (30, 31) comportant chacune un bord (38, 39) opposé à la ligne de jonction (36), lesdites ailes sont agencées de sorte que la distance entre les bords desdites ailes, mesurée dans un plan de mesure, est la même en tout point de la ligne de jonction.

3. Dispositif (10) selon l'une des revendications précédentes, **caractérisé en ce que** l'angle formé par les ailes (34, 35) de chaque pale (30, 31) est, du côté de l'extrémité centrale (32), de valeur comprise entre 70° et 100° et, du côté de l'extrémité extérieure (33), de valeur comprise entre 30° et 60°.

4. Dispositif (10) selon l'une des revendications précédentes, **caractérisé en ce que** chaque pale (30, 31) comporte au moins une paroi, dite « raidisseur », agencée dans le canal (37) formé par les ailes (34, 35).

5. Dispositif (10) selon la revendication 4, **caractérisé en ce que** chaque pale (30, 31) comporte un raidisseur (40) qui s'étend obliquement dans le canal, en direction de l'extrémité extérieure (33) de ladite pale (30, 31).

6. Dispositif (10) selon l'une des revendications précédentes, **caractérisé en ce qu'**il comporte plusieurs rotors (20) mobiles en rotation autour du même axe (21) de rotation, chaque rotor comportant au moins deux pales.

7. Dispositif (10) selon la revendication 6, **caractérisé en ce qu'**il comporte deux rotors (20) couplés en rotation comportant chacun exactement deux pales (30, 31) alignées l'une avec l'autre de part et d'autre de l'axe (21) de rotation, les pales de l'un desdits deux rotors étant agencées orthogonalement aux pales de l'autre desdits deux rotors.

## Patentansprüche

1. Vorrichtung (10) zum Umwandeln von kinetischer Energie eines Fluids in mechanische Energie, wobei die Vorrichtung einen Rotor (20) umfasst, der rotatorisch um eine Drehachse (21) wenigstens in einer Hauptdrehrichtung (22) des Rotors beweglich ist und wenigstens zwei Schaufeln (30, 31) aufweist, die sich in Bezug auf die Drehachse (21) des Rotors transversal erstrecken, wobei die Hauptdrehrichtung (22) des Rotors für jede Schaufel (30, 31) eine Vorderseite, in die sich die Schaufel verlagert, wenn sich der Rotor in der Hauptdrehrichtung dreht, und eine Hinterseite gegenüber der Vorderseite definiert, wobei jede Schaufel (30, 31) zwei Flügel (34, 35) aufweist, die einen zur Rückseite der Schaufel offenen Kanal (37) begrenzen und sich transversal in Bezug auf die Drehachse (21) zwischen einem zentralen Ende (32) der Schaufel auf Seiten der Drehachse (21) und einem äußeren Ende (33) der Schaufel auf der dem zentralen Ende gegenüberliegenden Seite erstrecken, wobei die Flügel (34, 35) auf Höhe einer Verbindungslinie (36) fest verbunden sind und sich ausgehend von der Verbindungslinie zur Rückseite der Schaufel erstrecken und dabei ein V-Profil in einer Ebene senkrecht zu der Verbindungslinie, die "Messebene" genannt wird, bilden, **dadurch gekennzeichnet, dass** die Flügel (34, 35) jeder Schaufel (30, 31):
- so beschaffen sind, dass sich der durch die Flügel in einer Messebene und hinter der Schaufel gebildete Winkel in Ahängigkeit von der Position des Schnittpunkts der Messebene mit der Verbindungslinie (36) verändert, indem er in Richtung des äußeren Endes (33) der Schaufel abnimmt, derart, dass sich die Flügel in Richtung des äußeren Endes (33) der Schaufel einander annähern,
- in der Weise konfiguriert sind, dass sich die Länge der Flügel gemessen in einer Messebene in Ahängigkeit von der Position des Schnittpunkts auf der Verbindungslinie verändert, indem sie in Richtung des äußeren Endes (33) der Schaufel zunimmt.

2. Vorrichtung (10) nach Anspruch 1, **dadurch gekennzeichnet, dass** die Flügel (34, 35) jeder Schaufel (30, 31) jeweils eine Kante (38, 39) gegenüber der Verbindungslinie (36) aufweisen, wobei die Flügel so beschaffen sind, dass der Abstand zwischen den Kanten der Flügel gemessen in einer Messebene an jedem Punkt der Verbindungslinie gleich ist.

3. Vorrichtung (10) nach einem der vorhergehenden Ansprüche, **dadurch gekennzeichnet, dass** der durch die Flügel (34, 35) jeder Schaufel (30, 31) gebildete Winkel auf Seiten des zentralen Endes (32) einen Wert hat, der im Bereich von 70° bis 100° liegt, und auf Seiten des äußeren Endes (33) einen Wert hat, der im Bereich von 30° bis 60° liegt.

4. Vorrichtung (10) nach einem der vorhergehenden Ansprüche, **dadurch gekennzeichnet, dass** jede Schaufel (30, 31) wenigstens eine Wand, die "Versteifungsrippe" genannt wird, aufweist, die in dem durch die Flügel (34, 35) gebildeten Kanal (37) angeordnet ist.

5. Vorrichtung (10) nach Anspruch 4, **dadurch gekennzeichnet, dass** jede Schaufel (30, 31) eine Versteifungsrippe (40) aufweist, die sich in dem Kanal in Richtung des äußeren Endes (33) der Schaufel (30, 31) schräg erstreckt.

6. Vorrichtung (10) nach einem der vorhergehenden Ansprüche, **dadurch gekennzeichnet, dass** sie mehrere Rotoren (20) umfasst, die rotatorisch um dieselbe Drehachse (21) beweglich sind, wobei jeder Rotor wenigstens zwei Schaufeln aufweist.

7. Vorrichtung (10) nach Anspruch 6, **dadurch gekennzeichnet, dass** sie zwei Rotoren (20) umfasst, die rotatorisch gekoppelt sind und jeweils genau zwei Schaufeln (30, 31) aufweisen, die beiderseits der Drehachse (21) aufeinander ausgerichtet sind, wobei die Schaufeln eines der zwei Rotoren senkrecht zu den Schaufeln des anderen der zwei Rotoren angeordnet sind.

## Claims

1. Device (10) for converting the kinetic energy of a fluid into mechanical energy, said device comprising a rotor (20) able to rotate about a rotation axis (21), in at least one main direction (22) of rotation of the said rotor and comprising at least two blades (30, 31) extending transversely with respect to the rotation axis (21) of the said rotor, the main direction (22) of rotation of the rotor defining, for each blade (30, 31), a front side towards which the said blade moves when the rotor is rotating in the said main direction of rotation, and a rear side which is the opposite side to the said front side, each blade (30, 31) comprising two wings (34, 35) delimiting a channel (37) open towards the rear of the said blade and running transversely with respect to the rotation axis (21) between a central end (32) of the said blade, which is on the side of the rotation axis (21), and an outer end (33) of the said blade, which is on the opposite side to the said central end, the wings (34, 35) joining at a join line (36) and extending, from the said join line, towards the rear of the said blade thereby forming a V-shaped profile in a plane orthogonal to the said join line, referred to as the "measurement plane", **characterized in that** the wings (34, 35) of each blade (30, 31) are:
- arranged in such a way that the angle formed between the said wings in a measurement plane and to the rear of the said blade varies with the position of the point of intersection of the said measurement plane with the join line (36), decreasing towards the outer end (33) of the said blade so that the said wings converge towards one another in the direction of the outer end (33) of the said blade,
- configured so that the length of the said wings, measured in a measurement plane, varies with the position of the point of intersection on the join line, increasing in the direction towards the outer end (33) of the said blade.

2. Device (10) according to Claim 1, **characterized in that**, with the wings (34, 35) of each blade (30, 31) each comprising an edge (38, 39) opposite to the join line (36), the said wings are arranged in such a way that the distance between the edges of the said wings, measured in a measurement plane, is the same at every point of the join line.

3. Device (10) according to one of the preceding claims, **characterized in that** the angle formed by the wings (34, 35) of each blade (30, 31) is, on the central end (32) side, of a magnitude of between 70° and 100° and, on the side of the outer end (33), of a magnitude of between 30° and 60°.

4. Device (10) according to one of the preceding claims, **characterized in that** each blade (30, 31) comprises at least one wall, referred to as a "stiffener", arranged inside the channel (37) formed by the wings (34, 35).

5. Device (10) according to Claim 4, **characterized in that** each blade (30, 31) comprises a stiffener (40) which extends obliquely in the channel, in the direction of the outer end (33) of the said blade (30, 31).

6. Device (10) according to one of the preceding claims, **characterized in that** it comprises several rotors (20) able to rotate about the same rotation axis (21), each rotor comprising at least two blades.

7. Device (10) according to Claim 6, **characterized in that** it comprises two rotors (20) coupled for rotation and each comprising exactly two blades (30, 31) which are aligned with one another on each side of the rotation axis (21), the blades of one of the said two rotors being arranged orthogonally to the blades of the other of the said two rotors.
